# EUROPEAN PATENT APPLICATION

(11) **EP 2 824 616 A1**
(43) Date of publication of application: **14.01.2015**
(21) Application number: 13003503.3
(22) Date of filing: 11.07.2013
(51) Int. Cl.: G06Q 10/08

(54) **Container with integral tracking device**

(71) Applicant: The Alternative Parcels Company Limited, Kingswood Lakeside Cannock Staffordshire WS11 8LD (GB)
(72) Inventor: Abel, Quentin, Knutsford, Cheshire, WA 16 0DL (GB); Cusworth, Nick, Worrall, Sheffield, S33 0AR (GB); Fletcher, Mark, Weston under Lizzard, TF11 8JT (GB); Griffiths, Paul, Strensall, York, YO32 5XB (GB); Barber, Jon, Windsor, SL4 4QF (GB); Brown, Karl, Belton, Nth Lincs, DN9 1QP (GB)
(74) Representative: Schneider, Michael

(57) **Abstract**

The present invention relates to a container with internal tracking device which allows to monitor the movements of an individual consignment of said container.

## Description

The present invention relates to a container with an internal tracking device which allows the user to monitor the movements of an individual consignment of said container.

It is a long-felt wish of delivery service providers or couriers, and also of their customers, to track the current location of dispatched containers or boxes and/or to monitor the movement of an individual consignment. In addition, it is desirable to track whether the container is dropped or opened without authority.

Tracking devices containing a GPS (Global Positioning System) combined with an RF (radio frequency) transmitter for sending location information to a remote receiving system are known. The known systems are, however, not suitable to continuously monitor on a "real-time" basis the movements of an individual consignment of a container or to track if the container is dropped or opened.

It is the object of the present invention to provide a suitable system.

Accordingly, the present invention relates to a container as defined in present claim 1, i.e. comprising a bottom panel, side panels and a cover panel, said container further comprising an integral tracking device for monitoring the movements of an individual consignment of said container, said integral tracking device comprising a GPS module, a microprocessor and at least one cellular network module comprising a multi-roaming SIM (Subscriber Identity Module) card for multi-national coverage, wherein upon activation of said integral tracking device said GPS module is arranged to receive GPS satellite signals and to calculate a location, said microprocessor is arranged to receive said location from said GPS module and to generate an encoded signal in dependence upon said location, and said at least one cellular network module is arranged to transmit said encoded signal to a remote computer system decoding said encoded signal and determining and displaying said location and thereby the movements of said container, wherein said integral tracking device is **characterized in that** said cover panel is connected to a switch which, when said cover panel is closed, permanently activates said integral tracking device.

Preferred and/or advantageous embodiments of the inventive integral tracking device are the subject-matter of the sub-claims.

In one embodiment of the present invention the integral tracking device continuously tracks the location of the container, or repeatingly tracks the location of the container in accordance with a pre-determined time schedule.

The container is not particularly limited, and any commercially available type can be used, for example containers supplied by Schoeller Allibert. The skilled artisan selects a suitable material and a suitable dimension in accordance with the practical circumstances.

Also the GPS module or GPS receiver, the microprocessor and the cellular network module which are components of the inventive internal tracking device are not particularly limited, and any commercially available type can be used.

The GPS module receives the GPS satellite signals and calculates the current location of the container. The current location is then sent, for example in the form of GPS data, to a microprocessor. The location data may be, for example, data encoded to the NMEA 0183 standard. The NMEA 0183 is a combined electrical and data specification for communication between marine electronic devices such as GPS receivers which have been defined by, and are controlled by, the U.S.-based National Marine Electronics Association.

The microprocessor receives the location data from the GPS module and encodes the GPS data to provide an encoded signal in dependence upon the current location. It will be appreciated that functionality of the microprocessor could be incorporated into a microprocessor which is internal to the GPS module or GPS receiver. If this is the case then the current location of the container may be sent to the microprocessor in the form of binary data, or by means of a variable in the program code.

The cellular network module is, for example, a GMS (Global System for Mobile Communication) module which transmits the location signal encoded by the microprocessor via an antenna to a remote computer system for determining and displaying the current location of the container. The antenna may be of any type, e.g. a printed-on antenna for space and weight saving. The GMS module may, for example, use at least one data network selected from the group consisting of 2G, 2.5G, 3G and 4G. The 2G data network may be GPRS or EDGE. The 3G data network may be UMTS, HSPA or LTE, and the 4G data network may be LTE-Advanced. In the USA also the CDMA (Code Division Multiple Access) data network may be used. The current location may be transmitted in regular intervals, or, preferably, continuously. Continuous transmittal allows "real-time" tracking of the movement of the container. The cellular network module comprises a multi-roaming SIM card so that the inventive integral tracking device can be used beyond national borders which is an important benefit for international delivery services. Since each container's internal tracking device has an individual multi-roaming SIM card the location and movement of a plurality of containers can be tracked.

The remote computer system is not particularly limited, and any commercially available type can be used, for example a Personal Computer (PC) based on a Microsoft Windows^{®} operating system. The remote computer system decodes the encoded signal received from the cellular network module and determines and displays the current location of the container. In one embodiment of the present invention the computer system may also calculate and display the route of delivery or the speed of delivery of the container or both. Suitable computer programs for this purpose are commercially available although the specific software used by the applicant for tracking a container is bespoke. The location information can be uploaded into the internet also, where it can be accessed remotely by users, for example via stationary or portable devices such as computers, notebook PCs, tablet PCs or cell phones (e.g. smart phones).

The switch activating the inventive integral tracking device is attached to the cover panel or lid of the container, for example located on a hinge, and is, e.g. mechanically, actuated when the cover panel or lid is closed or opened. The switch type is not particularly limited, and any commercially available one can be used.

In one embodiment of the present invention said integral tracking device sends an alert when the cover panel is opened. In yet another embodiment the integral tracking device comprises an adjustable shock sensor which sends an alert when the container is dropped. The alert may be sent via the cellular network module, for example, by email or texts to the remote computer system. It is also possible to send the alert to one or more mobile phones via SMS (Short Message Service). Other persons, or also a plurality of persons simultaneously, can thus be informed, for example the sender of the container and staff from the delivery service provider.

In one embodiment of the present invention said integral tracking device is portable and battery-operated. The tracking device also may report battery charge, for example to the remote computer system, and may revert to low power usage when stationary for more than a pre-determined period of time. In one embodiment of the present invention the tracking device has a LED showing low charge. Battery life can extend for up to 8 days when the location information is sent in 2 min intervals which is more than enough for all delivery routes.

The integral tracking device may be located inside or outside of the container and may comprise an attaching means which includes a circuit breaker incorporated therein, such that, if the integral tracking device is removed from the container to be tracked, an alert is sent.

For using the container with integral tracking device the customer puts the transport material (for example high value goods or important documents) into the container and closes the cover panel or lid. Closing the lid actuates the lid open/close switch. The customer seals the container with two standard serial numbered security tags. The delivery service picks the container up and registers the serial number of the seal. This allows the allocation of the customer to the multi-roaming SIM card in the cellular network module of the internal tracking device. During the transport of the container the internal tracking device continuously sends location information (in "real time") to the remote computer system. The customer can access the location information via the internet and can see exactly where the container is, or when it is dropped or opened. When the container reaches its destination, the recipient breaks the seals and opens the container which activates the internal tracking device to send an alert that the container has been opened. The customer may also monitor the performance of the delivery service or courier, e.g. speed of delivery, route of delivery, etc.

## Claims

1. A container comprising a bottom panel, side panels and a cover panel, said container further comprising an integral tracking device for monitoring the movements of an individual consignment of said container, said integral tracking device comprising a GPS module, a microprocessor and at least one cellular network module comprising a multi-roaming SIM card for multi-national coverage, wherein upon activation of said integral tracking device
said GPS module is arranged to receive GPS satellite signals and to calculate a location,
said microprocessor is arranged to receive said location from said GPS module and to generate an encoded signal in dependence upon said location, and said at least one cellular network module is arranged to transmit said encoded signal to a remote computer system decoding said encoded signal and determining and displaying said location and thereby the movements of said container,
wherein said integral tracking device is **characterized in that**
said cover panel is connected to a switch which, when said cover panel is closed, permanently activates said integral tracking device.

2. The container of claim 1, wherein said integral tracking device continuously tracks the location of said container or repeatingly tracks the location of said container in accordance with a pre-determined time schedule.

3. The container in claim 1, wherein said integral tracking device is permanently active.

4. The container of claim 1 or claim 2 or claim 3, wherein said integral tracking device sends an alert when said cover panel is opened.

5. The container of anyone of the preceding claims, wherein said integral tracking device comprises an adjustable shock sensor which sends an alert when said container is dropped.

6. The container of anyone of the preceding claims, wherein said integral tracking device is portable and battery-operated.

7. The container of claim 6, wherein said integral tracking device reports battery charge.

8. The container of claim 7, wherein said integral tracking device makes use of a LED showing low battery charge.

9. The container of claim 6 or claim 7, wherein said integral tracking device reverts to low power usage when stationary for more than a pre-determined period of time.

10. The container of anyone of the preceding claims, wherein said integral tracking device is located inside or outside said container.

11. The container of anyone of the preceding claims, wherein said integral tracking device comprises an attaching means which includes a circuit breaker incorporated therein, such that, if said integral tracking device is removed from the container to be tracked, an alert is sent.

12. The container of anyone of the preceding claims, wherein said GMS module uses at least one data network selected from the group consisting of 2G, 2.5G, 3G and 4G.

13. The container of claim 12, wherein said 3G data network is UMTS, HSPA or LTE and said 4G data network is LTE-Advanced.

14. The container of anyone of the preceding claims, wherein said remote computer system calculates and displays the route of delivery and/or the speed of delivery of said container.

15. Use of an internal tracking device as defined in anyone of the preceding claims for tracking the current location and movement of a container.
